# EUROPEAN PATENT APPLICATION

(11) **EP 4 703 918 A1**
(43) Date of publication of application: **04.03.2026**
(21) Application number: 24196512.8
(22) Date of filing: 26.08.2024
(51) Int. Cl.: G06F 18/214, G06V 10/774, G06V 10/778

(54) **LOCATING AND CLASSIFYING ARTHROPODS IN IMAGES**

(71) Applicant: Bayer Aktiengesellschaft, 51373 Leverkusen (DE)
(72) Inventor: ALESSANDRI ALVIM MIOTTO, Guilherme, 50769 Köln (DE); BORN, Fabian Christian, 57319 Bad Berleburg (DE); TEMPEL, Matthias, 50935 Köln (DE); POLMAN, Martijn Diederik, 51580 Reichshof (DE)
(74) Representative: BIP Patents

(57) **Abstract**

Systems, methods, and computer programs disclosed herein relate to the localization and classifcation of arthropods in images.

## Description

### FIELD OF THE DISCLOSURE

Systems, methods, and computer programs disclosed herein relate to the localization and classification of arthropods in images.

### BACKGROUND

F. B. Ashraf *et al.* disclose a method for automatically detecting and identifying insects using a trained machine learning model (F. B. Ashraf et al.: Classifying Insect Pests from Image Data using Deep Learning, DOI: 10.1109/CISP-BMEI56279.2022.9979872). A disadvantage of this method is that the model can only detect and identify those insect species on which it has been trained. In order to detect and identify other insect species, the model would have to be trained on further training data or another model would have to be trained on further training data.

Usually, to train a machine learning model, a large number of images of insects is first collected and then labeled manually by an expert. Such labeling usually involves marking an insect in an image (e.g. by drawing a bounding box around the insect) and specifying the insect's species. Such a process is time-consuming and costly. The model cannot be used until it has been trained.

### SUMMARY

The present disclosure addresses this and further problems.

In a first aspect, the present disclosure provides a computer-implemented method comprising:
- receiving a first image of an area in which one or more arthropods are present,
- feeding the first image to a first machine learning model, wherein the first machine learning model is configured and was trained to locate arthropods in the first image,
- generating a second image in which the one or more arthropods are marked,
- outputting the second image to a user,
- receiving a user input from the user, wherein the user input specifies for one or more marked arthropods that they belong to a defined class,
- feeding the user input to a second machine learning model, wherein the second machine learning model comprises a classifier, wherein the second machine learning model is configured to use the user input as target data for training the classifier,
- storing and/or outputting the trained classifier and/or parameters of the trained classifier and/or transmitting the trained classifier and/or parameters of the trained classifier to a separate computer system.

In another aspect, the present disclosure provides a computer system comprising:
a processing unit; and
a memory storing a computer program configured to perform, when executed by the processing unit, an operation, the operation comprising:
   - receiving a first image of an area in which one or more arthropods are present,
   - feeding the first image to a first machine learning model, wherein the first machine learning model is configured and was trained to locate arthropods in the first image,
   - generating a second image in which the one or more arthropods are marked,
   - outputting the second image to a user,
   - receiving a user input from the user, wherein the user input specifies for one or more marked arthropods that they belong to a defined class,
   - feeding the user input to a second machine learning model, wherein the second machine learning model comprises a classifier, wherein the second machine learning model is configured to use the user input as target data for training the classifier,
   - storing and/or outputting the trained classifier and/or parameters of the trained classifier and/or transmitting the trained classifier and/or parameters of the trained classifier to a separate computer system.

In another aspect, the present disclosure provides a non-transitory computer readable storage medium having stored thereon a computer program that, when executed by a processing unit of a computer system, cause the computer system to execute the following steps:
- receiving a first image of an area in which one or more arthropods are present,
- feeding the first image to a first machine learning model, wherein the first machine learning model is configured and was trained to locate arthropods in the first image,
- generating a second image in which the one or more arthropods are marked,
- outputting the second image to a user,
- receiving a user input from the user, wherein the user input specifies for one or more marked arthropods that they belong to a defined class,
- feeding the user input to a second machine learning model, wherein the second machine learning model comprises a classifier, wherein the second machine learning model is configured to use the user input as target data for training the classifier,
- storing and/or outputting the trained classifier and/or parameters of the trained classifier and/or transmitting the trained classifier and/or parameters of the trained classifier to a separate computer system.

### BRIEF DESCRIPTION OF THE DRAWINGS

Fig. 1 shows an exemplary and schematic embodiment of the computer-implemented method of the present disclosure.
Fig. 2 exemplarily and schematically shows the processing of a first image by the computer system of the present disclosure.
Fig. 3 schematically shows a further embodiment of the processing of a first image by the computer system of the present disclosure.
Fig. 4 schematically shows a further embodiment of the processing of a first image by the computer system of the present disclosure.
Fig. 5 schematically shows an embodiment of the computer-implemented method of the present disclosure.

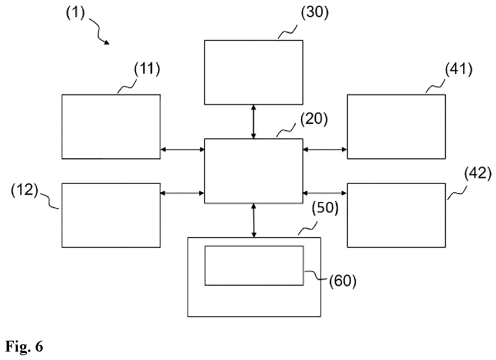

Fig. 6 illustrates a computer system according to some example implementations of the present disclosure in more detail.

### DETAILED DESCRIPTION

Various example embodiments will be more particularly elucidated below without distinguishing between the aspects of the disclosure (method, computer system, computer-readable storage medium). On the contrary, the following elucidations are intended to apply analogously to all the aspects of the disclosure, irrespective of in which context (method, computer system, computer-readable storage medium) they occur.

If steps are stated in an order in the present description or in the claims, this does not necessarily mean that the disclosure is restricted to the stated order. On the contrary, it is conceivable that the steps can also be executed in a different order or else in parallel to one another, unless, for example one step builds upon another step, this requiring that the building step be executed subsequently (this being, however, clear in the individual case). The stated orders may thus be exemplary embodiments of the present disclosure.

As used herein, the articles "a" and "an" are intended to include one or more items and may be used interchangeably with "one or more" and "at least one". As used in the specification and the claims, the singular form of "a", "an", and "the" include plural referents, unless the context clearly dictates otherwise. Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise.

Some implementations of the present disclosure will be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art.

The terms used in this disclosure have the meaning that these terms have in the prior art, in particular in the prior art cited in this disclosure, unless otherwise indicated.

The present disclosure deals with locating arthropods in images and classifying the arthropods.

Arthropods are a diverse group of invertebrate animals that belong to the phylum Arthropoda.

Arthropods play essential roles in ecosystems as pollinators, decomposers, and as a part of the food web. They can also be of economic importance, both beneficially (e.g., pollination, silk production) and detrimentally (e.g., as agricultural pests, vectors of diseases).

Arthropods are classified into several major groups (subphyla and classes), including insects, and arachnids.

In an embodiment of the present disclosure, the term arthropods refers exclusively to insects and arachnids.

In another embodiment of the present disclosure, the term arthropods refers exclusively to insects.

In another embodiment of the present disclosure, the term arthropods refers exclusively to adult insects.

In another embodiment of the present disclosure, the term arthropods refers exclusively to insects in the form of caterpillars.

In another embodiment of the present disclosure, the term arthropods refers exclusively to arachnids.

In another embodiment of the present disclosure, the term arthropods refers exclusively to mites.

The term "locate" (often also referred to as "localize") refers to finding the position of an object in an image. Object localization answers the question of "where" an object can be found in an image.

The term "classify" refers to the assignment of an object to a defined class and/or category. Object classification answers the question of "what" is in the image.

The term "object recognition" means the joint localization and classification of an object in an image.

In the present disclosure, the term "object" refers to an arthropod.

In relation to arthropods, the term "class" may mean a class, order, family, genus, and/or species in the sense of biological taxonomy, and/or any combination thereof, such as a set of species, or the union of two families.

The class may indicate a biological interaction with a plant, such as mutualism (e.g. pollinator), parasitism (e.g. pest), commensalism, or neutralism.

The term "class" can mean that the arthropod is a beneficial or a pest for plants.

The term "class" can also mean that the arthropod is a beneficial or a pest for a specific plant.

The term "class" can also mean that the arthropod is a pest that can be controlled with a plant protection product.

The term "class" can also mean that the arthropod is a pest that can be controlled with a specific pesticide.

The term "class" can also mean that the arthropod is a pest that cannot be controlled with a (specific) plant protection product.

In a first step, a first image is received.

The term "receiving" is to be interpreted broadly and includes any means capable of providing an image (or any other data) for further processing by the computer system of the present disclosure.

The term "receiving" may mean transmitting data from another computer system to the computer system of the present disclosure. The term "receiving" may mean transmitting data from an imaging device such as a camera to the computer system of the present disclosure. The term "receiving" may mean uploading of data into the computer system of the present disclosure, e.g. by a user. The term "receiving" may mean retrieving data from a data storage; the data storage may be a component of and/or connected to the computer system of the present disclosure, for example via a network.

An "image" is a visual representation of a scene and/or one or more objects that is captured or generated by the interaction of light with light-sensitive substances or sensors. It encompasses a wide array of formats, including but not limited to digital photographs, videos, and thermal images.

An image can be represented in various forms, including two-dimensional (2D) arrays of pixels in grayscale or colour, three-dimensional (3D) models or renderings, and multi-dimensional data capturing different spectral, temporal, or depth dimensions. The content of an image may be perceived by humans or processed by machines for the purpose of analysis, interpretation, and/or decision-making.

The first image is a digital image. "Digital" means that the image can be processed by a computer system.

The first image represents an area in which one or more arthropods are present. In other words, the first image shows one or more arthropods in an area.

The area may be or include a plant or part of a plant or several plants or several parts of several plants.

A part of a plant can be or include a leaf or a flower or a branch or a stem or a root, for example. In the case of a leaf, it can be an upper side (the side facing the sun) and/or an underside (the side facing away from the sun).

The area can also be the inner volume or the bottom of a catch tray (e.g. a catch tray as described in the following publications: WO2020058175A1, WO2020058170A1, WO2021213824A1, WO2022243150A1, PCT/EP2024/052592, PCT/EP2024/054944, EP23197150.8) or the surface of a sticky trap (e.g. a sticky trap as described in the following publications: WO2023/043871A1, WO2018/131853A1, WO2004/095919A2).

The number of arthropods shown in the first image is greater than 1 and usually less than one hundred. However, it can also be greater than one hundred.

The first image is inputted into a first machine learning model.

Such a "machine learning model", as used herein, may be understood as a computer implemented data processing architecture. The machine learning model can receive input data and provide output data based on that input data and on parameters of the machine learning model (model parameters). The machine learning model can learn a relation between input data and output data through training. In training, parameters of the machine learning model may be adjusted in order to provide a desired output for a given input.

The process of training a machine learning model involves providing a machine learning algorithm (that is the learning algorithm) with training data to learn from. The term "trained machine learning model" refers to the model artifact that is created by the training process. The training data usually contains the correct answer, which is referred to as the target. The learning algorithm finds patterns in the training data that map input data to the target, and it outputs a trained machine learning model that captures these patterns.

In the training process, input data are inputted into the machine learning model and the machine learning model generates an output. The output may be compared with the (known) target. Parameters of the machine learning model may be modified in order to reduce the deviations between the output and the (known) target to a (defined) minimum.

In general, a loss function can be used for training, where the loss function can quantify the deviations between the output and the target. The aim of the training process can be to modify (adjust) parameters of the machine learning model in order to reduce the loss to a (defined) minimum. The loss function is usually minimized using an optimization method, e.g. a gradient descent method.

The machine learning models of the present disclosure may comprise multiple components (i.e. more than one), which are also referred to as sub-models.

The first machine learning model is configured and was trained to locate arthropods in the first image.

Locating can be done, for example, by specifying a bounding box around the arthropod.

A "bounding box" may be a rectangular box defined by the coordinates of its corners that encapsulates an object of interest within an image. The bounding box is characterized by its position, typically specified by the coordinates of the top-left corner (x₁, y₁) and the bottom-right corner (x₂, y₂), or alternatively by the center coordinates (cx, cy) along with its width (w) and height (h). The bounding box serves as a spatial representation that delineates the extent of the object, enabling its identification, and/or analysis.

Bounding boxes are often used to mark objects in images. It should be noted that the bounding box does not necessarily have to be rectangular; other geometric shapes are also suitable for marking objects, e.g. circles, ellipses, hexagons or other shapes. In this respect, the term "bounding box" is to be interpreted broadly and is not limited to rectangular boxes.

As an alternative or in addition to a bounding box, an arthropod in an image can also be highlighted in colour in the image. It is also conceivable that the marking is done by displaying parts of the image that do not include arthropods in a different colour or in grey scales and/or in reduced brightness and/or with reduced contrast, so that the arthropods are highlighted in this way in relation to the other parts of the image. Marking can also mean the addition of a label or the addition of an indicator (e.g. an arrow) that points to a localized arthropod.

There may be further/other options for marking. The marking is used to indicate to a user where one or more arthropods are depicted in the image. The skilled person is aware of other methods of marking that are suitable for highlighting localized arthropods to a user.

It is possible that different classes of arthropods are marked differently in the image. In the case of bounding boxes, for example, these can have different colours and/or borders.

The first machine learning model may be configured to generate and output coordinates and/or parameters of a bounding box for each located arthropod. The first machine learning model may be configured to generate and output coordinates of image elements (e.g. pixels) that represent located arthropods.

The coordinates and/or parameters of such bounding boxes and/or coordinates image elements representing arthropods can be used to generate a second image based on the first image.

The second image usually corresponds to the first image, with the difference that one or more arthropods are marked.

The second image can also be an overlay of the first image with one or more markers (e.g. bounding boxes).

It is also possible that the first machine learning model is configured and trained to generate and output a second image based on a first image, in which one or more localized arthropods are marked.

The second image is outputted to a user.

It is also possible for more than one second image to be generated and output.

For example, an image can be generated and output in which arthropods are marked for which the probability that they are arthropods is greater than or equal to a predefined threshold value and another image can be generated and output for which the probability that they are arthropods is less than the predefined threshold value. The threshold value can be defined by a user, for example. The first machine learning model may be configured to output, for each localized arthropod, the probability that it is an arthropod.

It is also possible that an image is generated and output in which arthropods of a first class are marked, and another image is generated and output in which arthropods of a second class are marked.

The first machine learning model may be configured to generate a feature vector for each located arthropod.

A "feature vector", sometimes also referred as an "embedding", is a numerical representation of an object. The numerical representation is usually an array of numbers, such as a vector, a matrix, a tensor or any other arrangement of numbers. In other words, the term feature vector is not limited to vectors, but can also include other arrangements of numbers.

In an embodiment of the present disclosure, the feature vector is a fixed-size unidimensional array of real numbers.

A feature vector might be composed of various measurements or characteristics extracted from the first image and/or a part thereof that collectively represent an arthropod within the first image.

The first machine learning model may be configured and trained to analyse the first image and extract features such as edges, corners, and/or specific textures into a feature vector.

The first machine learning model may be or comprise a convolutional neural network. Convolutional neural networks (CNNs) are a class of deep neural networks that are particularly powerful for tasks related to image processing, such as object detection. They can automatically and adaptively learn spatial hierarchies of features from input images. CNNs comprise layers that perform operations on the input image. The primary layers include convolutional layers, pooling layers, and fully connected layers. The convolutional layers apply filters (also known as kernels) to the input image to create feature maps. These filters are designed to detect specific features such as edges, textures, or more complex patterns as the network goes deeper. Pooling layers reduce the dimensionality of the feature maps, making the detection of features invariant to scale and orientation and reducing the computational load. Toward the end of the network, fully connected layers aggregate the data from the feature maps. In the context of generating feature vectors, the output from the last fully connected layer can serve as a feature vector.

In an embodiment of the present disclosure, a feature vector is generated for each localized arthropod.

The first machine learning model performs the localization of one or more arthropods based on the first image. It is possible that the first machine learning model uses further data for localization, for example information about the first image (where the first image was taken, which plant or trap the first image shows, when the first image was taken (e.g. time, season) in which magnification the first image shows one or more arthropods) and further/other data.

The first machine learning model can be any model that is able to localize objects in an image, such as a model for object detection and/or a segmentation model.

In an embodiment of the present disclosure, the first machine learning model is or comprises an object detection model.

Various models for object detection in images are disclosed in the state of the art.

For example, the first machine learning model may be or comprise an R-CNN model (R-CNN: Regions with Convolutional Neural Network, see, e.g., R. Girshick et al.: Rich feature hierarchies for accurate object detection and semantic segmentation, arXiv:1311.2524v5).

The idea behind R-CNN is to take a two-step approach to object detection:
First, a number of candidate regions or bounding boxes is identified in an image where there is a high likelihood of finding an object. This is about pinpointing where something of interest might be. This step is crucial because it significantly reduces the number of locations the model needs to evaluate, compared to looking at every possible location in the image. For each proposed region, a CNN is applied to extract features from the region and then classify the object within the proposed region. Additionally, it refines the bounding box coordinates to more accurately encompass the object.

The first machine learning model may be or comprise a Fast R-CNN or a Faster R-CNN model (see, e.g. R. Girshick: Fast R-CNN, arXiv:1504.08083v2; S. Ren et al.: Faster R-CNN: Towards Real-Time Object Detection with Region Proposal Networks, arXiv: 1506.01497v3).

The original R-CNN has inspired a series of improvements and iterations, leading to faster and more efficient models like Fast R-CNN and Faster R-CNN. These models have addressed many of the limitations of the original R-CNN, especially regarding speed and training complexity.

The first machine learning model may be or comprise a YOLO model (YOLO: You Only Look Once, see, e.g. J. Redmon et al.: You Only Look Once: Unified, Real-Time Object Detection, arXiv:1506.02640v5).

Unlike the R-CNN family of models, which first propose regions and then classify them, YOLO frames object detection as a single regression problem, directly moving from image pixels to bounding box coordinates and class probabilities. This is achieved by dividing the image into a grid (e.g., a 13x13 grid), and for each grid cell, predicting bounding boxes and probabilities for those boxes. Each bounding box prediction includes: the coordinates of the center of the box (relative to the grid cell location), the width and height of the box (relative to the whole image), a confidence score indicating the likelihood that the box contains an object, and a class probabilities indicating the likelihood of each class being present in the box.

The first machine learning model may be or comprise an SSD (Single Shot MultiBox Detector, see, e.g. W. Liu et al.: SSD: Single Shot MultiBox Detector, arXiv:1512.02325v5).

SSD addresses some of the limitations of earlier detection systems, like YOLO, by providing a method that is both fast and capable of detecting objects at multiple scales. SSD simplifies the object detection workflow by eliminating the need for a separate proposal generation step, which is a characteristic of two-stage detectors like those in the R-CNN family. Instead, SSD performs detection in a single shot, hence the name, by predicting both the bounding box locations and class probabilities directly from the image in one go.

In an embodiment of the present invention, the first machine learning model is or comprises a DETR model (DETR: Detection Transformer, see, e.g. N. Carion et al.: End-to-End Object Detection with Transformers, arXiv:2005.12872v3).

DETR simplifies the object detection pipeline by eliminating the need for many hand-designed components that are common in traditional object detection systems, such as non-maximum suppression and anchor generation. Instead, DETR leverages the Transformer architecture, originally designed for natural language processing tasks, to directly predict object bounding boxes and their corresponding class labels from an image in a more end-to-end manner. DETR treats object detection as a direct set prediction problem. It uses a transformer, combined with a CNN, to process the input image. The transformer architecture is adept at handling sequences of data and capturing long-range dependencies, which, in the context of DETR, allows it to consider the entire image and the relationships between different objects within the image to make accurate predictions.

The DETR model can be trained end-to-end. The CNN of the DETR model can be pre-trained.

The term "pre-trained" refers to a machine learning model that has undergone an initial training phase on a large and diverse dataset before being fine-tuned and/or applied to specific tasks. Pre-training involves learning the underlying patterns, structures, and representations of data, which can then be leveraged for various downstream tasks with minimal additional training. For example, the CNN may be a ResNet-50 (see, e.g. DOI: 10.33395/sinkron.v8i2.12378) pretrained on ImageNet (see, e.g. DOI: 10.1109/CVPR.2009.5206848).

The models mentioned here are merely examples. There are many other models that can be used for object detection and thus as the first machine learning model of the present disclosure.

The first machine learning model was trained. The first machine learning model was trained to localize arthropods in images. Such training is based on training data. Usually, such training data comprises a plurality of images of a large number of arthropods.

The term "plurality" usually means more than 100 or even more than 1000.

The training for a first machine learning model in the form of an object detection model is described below. The expert in the field of machine learning knows how to adapt the described training to models of other types.

The aim of the training may be to give the first machine learning model a general understanding of what an arthropod looks like.

In an embodiment of the present disclosure, the training data comprises a plurality of images of a plurality of different arthropods.

In an embodiment of the present disclosure, the training data comprises a plurality of images of a plurality of different arthropods that are or may be plant pests.

Such images serve as input data during training. The training data further comprises, for each image, information as to where an arthropod is depicted in the image, and the class the arthropod belongs to. It is possible that more than one arthropod is depicted in one or more or all images. Typically, the training data comprises, for each image, location information and class information for each arthropod depicted in the image. The location information may be in the form of bounding boxes and/or their coordinates, for examples. The location information may be in the form of coordinates of image elements representing the arthropod in the image. The class information may be in the form of positive integers, which uniquely identify each class. The location information and class information serve as target data during training.

The training usually comprises the following steps:
for each image of the multitude of images:
   - inputting the image into the first machine learning model,
   - receiving an output from the first machine learning model, the output indicating the location and class of one or more arthropods depicted in the image,
   - comparing the output with the target data, i.e. comparing a predicted location of an arthropod image with the real location of the arthropod in the image, and comparing a predicted class of located arthropod with the real class of the located arthropod,
   - determining a deviation between the output and the target data, i.e. determining a first deviation between the predicted location and the real location and a second deviation between the predicted class and the real class,
   - reducing the deviation(s) by modifying parameters of the first machine learning model.

The deviation(s) can be determined using a loss function.

Training a model for object detection in images may involve predicting the coordinates of a bounding box that accurately encases the object of interest. This task requires a loss function that can effectively quantify the difference between the predicted bounding box coordinates and the ground truth (i.e. the real bounding box coordinates). Suitable localization loss functions are: Mean Squared Error (MSE), Intersection over Union (IoU), smooth L1 loss, and/or Huber loss or combinations thereof.

Examples of classification losses are Binary Cross Entropy, and Negative Log-likelihood.

The total loss may be a sum of the localization loss and classification loss. The losses can be weighted. The weights can vary during training.

The training steps can be carried out until a stop criterion is reached. Such a stop criterion can be for example: a predefined maximum number of training steps/cycles/epochs has been performed, deviations between output and target data can no longer be reduced by modifying the model parameters, a predefined minimum of the loss function is reached, and/or an extreme value (e.g., maximum or minimum) of another performance value is reached.

One advantage of using an object detection model as the first machine learning model is that it is readily configured to generate feature vectors that can be used for classification.

In the case of the first machine learning model of the present disclosure, the object detection model can be trained to recognize arthropods. It can be configured as a binary classification model that assigns an object to one of two classes, where a first class represents arthropods, and the second class represents objects that are not arthropods. Once the first machine learning model has been trained, the classifier of the first machine learning model can be discarded. The trained first machine learning model can be used to localize one or more arthropods in a first image and provide a feature vector for each localized arthropod that represents/characterizes the localized arthropod.

The second image is output to a user, e.g. displayed on a monitor. The user can recognize where arthropods are depicted in the image. The markings show the user where arthropods are depicted.

The computer system of the present disclosure is configured to receive user input from the user. The user can make such a user input e.g. via a human-machine interface (HMI).

A human-machine interface (HMI) may comprise a mouse and/or keyboard and/or a microphone and/or a touchscreen and/or a microphone and/or other means.

The computer system of the present disclosure may be configured to prompt the user for user input.

The user input specifies for one or more marked arthropods that they belong to a defined class.

It is possible that the user himself/herself determines the defined class.

For example, the user may be interested in training the second machine learning model to identify arthropods of a certain species. The user can therefore provide a user input that indicates for one or more marked arthropods which species they belong to.

However, as described above, the defined class can also relate to a different aspect (e.g. beneficial arthropod, pest, beneficial for a specific plant, pest for a specific plant, pest that can be controlled by a (specific) plant protection product, pest that cannot be controlled by a (specific) plant protection product).

It is also possible for the user to assign different arthropods to different classes in the user input.

It is possible that the user is provided with one or more selection menus from which the user can select one or more classes for a marked arthropod.

The user input can also indicate marked objects that were incorrectly marked as arthropods or incorrectly marked as arthropods of a defined class.

For example, the user can use the HMI to select one or more marked arthropods that belong to a specific class and/or were marked incorrectly.

For example, the user can use the HMI to indicate which class one or more marked arthropods belong to.

In other words, the user performs the class labelling of one or more of the marked arthropods.

The user input can be used to generate a labelled image. A labelled image refers to an image that is tagged with one or more labels to indicate the type of object(s) that are present in the image. These labels, also known as annotations, are typically added manually by human annotators. The labels can be as simple as a tag indicating the presence of an object or they can be more complex, such as a bounding box drawn around the object, a pixel-level mask indicating the exact shape of the object, or even a series of points outlining the object. Labels may be used as targets, i.e. ground-truth, for training machine learning models.

The information about the position of one or more arthropods in the first image and/or second image provided by the first machine learning model, and the user's information about what kind of arthropod it is, together with the first and/or second image, result in a labelled image.

The labelled image can be output (e.g. displayed on a monitor and/or printing using a printing device), stored in a data storage and/or transmitted to a separate computer system.

The user input, i.e. class labels provided by the user are fed to the second machine learning model.

The second machine learning model may be part of the first machine learning model or a separate model.

The task of the second machine learning model may be to learn the mapping from the feature vectors to the classes.

The second machine learning model comprises a classifier. The second machine learning model has means to train the classifier in a supervised learning process.

A "classifier" is a computational model or algorithm that is designed to categorize input data (such as a feature vector) into predefined classes.

Feature vectors used for classification may be provided by the first machine learning model and/or generated by the second machine learning model based on the first and/or second image.

In an embodiment of the present invention, the feature vector representing an arthropod in the first and/or second image is provided by the first machine learning model.

The classifier can be a binary classifier or a multi-class classifier.

A binary classifier is designed to distinguish between two classes. It may use features of an arthropod depicted in an image to classify it into one of the two classes. One class can specify that the arthropod belongs to a certain group and the other class can specify that the arthropod does not belong to that group. However, it is also possible for one class to represent arthropods of a first group and the second class to represent arthropods of a second group.

A multi-class classifier can distinguish between three or more classes. It uses features of an arthropod depicted in an image to classify it into one of several possible classes.

The user input, i.e. the class label provided by the user, is used to train the classifier in a supervised learning process. In the supervised learning process, the user input acts as a target. Features of an arthropod depicted in the first and/or second image are used as input data. The features can be a feature vector that the first machine learning model generated to localize (and optionally classify) the arthropod in the first image. For example, if the first machine learning model comprises a CNN, the feature vector may comprise feature maps extracted from one or more layers of the CNN.

The classifier is trained automatically. "Automatically" means without human intervention. The second machine learning model is configured to use the user input as target data for training the classifier.

The classifier predicts a class for a marked arthropod addressed by the user in his/her user input. The predicted class is compared with the target data, i.e. the class to which the user has assigned the marked arthropod. A loss function is used to compare the predicted class with the target data. Deviations are reduced by modifying parameters of the classifier.

The loss function can be a binary cross-entropy loss (in case of a binary classification task) or a categorical cross-entropy loss (in case of a multi-class classification task), for example.

In an embodiment of the present disclosure, the classifier is (re-)trained immediately after each incoming user input. In other words, whenever the user adds a label, this new label and all provided by the user before it, are used as target data for re-training the classifier. In other words, after the user has made a first user input and while the user is making a second user input, the first user input may be used to train the classifier, and once the second user input is completed, the first user input and the second user input may be used to re-train the classifier.

In an embodiment of the present disclosure, the trained classifier is applied to (e.g. all) marked arthropods after each new re-training of the classifier.

The classifications made by the (re-)trained classifier can be displayed as suggestions in the second image and/or a third image. Such suggestions can be displayed as suggestions by marking the respective arthropods (e.g. by colour, shape, and or a label). It is possible that the suggestions are updated with each training step, i.e. whenever the classifier has been re-trained, it can be used to generate suggestions and/or update suggestions.

It is possible that only those suggestions are displayed whose prediction uncertainty does not exceed a predefined threshold. It is possible that the prediction uncertainty is also displayed to the user for each displayed suggestion. The prediction uncertainty reflects the confidence that the classifier correctly classified an arthropod. The predefined threshold can be set by the user, for example.

The second machine learning model may be configured to receive a confirmation or rejection for a suggestion from the user. The second machine learning model may be configured to use such confirmation or rejection of the user as additional target data to re-train the classifier.

The trained classifier and/or parameters of the trained classifier can be stored in a data storage.

The trained classifier and/or parameters of the trained classifier can be output, e.g., displayed on a monitor and/or printed using a printing device.

The trained classifier and/or parameters of the trained classifier can be transmitted to a separate computer system.

The trained classifier and/or parameters of the trained classifier can be shared with other users.

The classifier can be any classifier that can assign a feature vector to one of at least two classes.

In an embodiment of the present disclosure, the classifier is a shallow classifier.

A "shallow classifier" refers to a classification model that has a relatively simple structure, typically consisting of a limited number of layers or processing stages. Unlike deep learning models, which may have dozens or hundreds of layers enabling them to model complex patterns and relationships in data, shallow classifiers rely on simpler, often linear or slightly non-linear, mechanisms to perform classification tasks.

The classifier can be a logistic regression model. Logistic regression is a linear model for binary or multi-class classification that estimates probabilities using a logistic function. It is considered shallow because it essentially uses a single equation to make predictions.

The classifier can be a support vector machine (SVM). SVMs can be used for both linear and non-linear classification tasks. They work by finding the hyperplane that best separates different classes in the feature space. For non-linear classification, SVMs use kernel functions to project data into higher-dimensional spaces where it may be linearly separable.

The classifier can be or comprise a decision tree. A decision tree is a flowchart-like structure where each internal node represents a "test" on an attribute, each branch represents the outcome of the test, and each leaf node represents a class label.

The classifier can be a k-nearest neighbours (k-NN) model. A k-NN model is a non-parametric method used for classification and regression. For classification, it identifies the k nearest training examples in the feature space and the most common class among those k examples is used as the prediction.

The classifier can be a Naive Bayes model. This classifier applies Bayes' theorem with the assumption of independence between every pair of features.

Further embodiments of the present disclosure are:
1. A computer-implemented method comprising:
   - receiving a first image of an area in which one or more arthropods are present,
   - feeding the first image to a first machine learning model, wherein the first machine learning model is configured and was trained to locate arthropods in the first image,
   - generating a second image in which the one or more arthropods are marked,
   - outputting the second image to a user,
   - receiving a user input from the user, wherein the user input specifies for one or more marked arthropods that they belong to a defined class,
   - feeding the user input to a second machine learning model, wherein the second machine learning model comprises a classifier, wherein the second machine learning model is configured to use the user input as target data for training the classifier,
   - storing and/or outputting the trained classifier and/or parameters of the trained classifier and/or transmitting the trained classifier and/or parameters of the trained classifier to a separate computer system.
2. The method of embodiment 1, further comprising:
   - generating a labelled image based on the first image and/or the second image and the user input,
   - storing and/or outputting the labelled image and/or transmitting the labelled image to a separate computer system.
3. The method of embodiment 1 or 2, wherein arthropods means insects and/or arachnids.
4. The method of any one of embodiments 1 to 3, wherein the area is part of a trap for arthropods.
5. The method of any one of embodiments 1 to 4, wherein the user input comprises:
   - selecting a marked arthropod,
   - assigning the selected arthropod to one of at least two classes.
6. The method of embodiment 5, wherein the classifier is trained to map a feature vector representing the selected arthropod to one of the at least two classes.
7. The method of embodiment 5, wherein the classifier is trained to map a feature vector representing the selected arthropod to one of two classes, a first class representing arthropods of a pre-defined group, and a second class representing objects not being arthropods of the pre-defined group.
8. The method of embodiment 7, wherein the class is a biological taxonomic class, order, family, genus, and/or species and/or a combination thereof.
9. The method of embodiment 7, wherein the class indicates a biological interaction with a plant.
10. The method of embodiment 7, wherein the class represents pest controllable with a plant protection product.
11. The method of embodiment 5, wherein the classifier is trained to map a feature vector representing the selected arthropod to one of the at least two classes, wherein the at least two classes comprise a first class representing arthropods of a first group and a second class representing arthropods of a second group.
12. The method of embodiment 5, wherein the first class is a first biological taxonomy class, order, family, genus, and/or species, or a combination thereof, and the second class is a second biological taxonomy class, order, family, genus, and/or species or a combination thereof.
13. The method of any one of embodiments 5 to 12, wherein training of the classifier comprises:
   - inputting a feature vector representing the selected arthropod into the classifier,
   - receiving a predicted class from the classifier,
   - determining a deviation between the predicted class and the target data,
   - reducing the deviation by modifying model parameters of the classifier.
14. The method of any one of embodiments 5 to 13, wherein the classifier is configured to assign one or more marked arthropods not selected by the user to the one of the at least two classes once the classifier has been trained based on the user input.
15. The method of embodiment 14, further comprising:
   - outputting a third image comprising the assignments of the trained classifier.
16. The method of embodiment 15, further comprising:
   - receiving a confirmation or rejection from the user that the one or more assigned arthropods have been correctly classified,
   - using the confirmation or rejection as further training data for training the classifier.
17. The method of any one of embodiments 1 to 16, wherein the classifier is a shallow classifier.
18. The method of any one of embodiments 1 to 17, wherein the classifier is or comprises a logistic regression model, SVM, decision tree, k-nearest neighbours model, and/or a Naive Bayes model.
19. The method of any one of embodiments 5 to 18, wherein the feature vector representing the selected arthropod is provided by the first machine learning model
20. The method of embodiment 19, wherein the first machine learning model comprises a neural network, wherein the neural network is configured to generate one or more feature vectors representing the one or more arthropods.
21. The method of any one of embodiments 1 to 20, wherein the first machine learning model is or comprises an R-CNN, a Fast R-CNN, a Faster R-CNN, a YOLO, an SSD, and/or a DETR model or a combination thereof.
22. The method of any one of embodiments 1 to 21, wherein the first machine learning model is or comprises an object detection model, wherein training the first machine learning model comprised:
   - providing training data, wherein the training data comprises a plurality of images of a plurality of arthropods, as well as location information and class information for each image, wherein the location information indicates where one or more arthropods are located in the image, and the class information indicates for each of the one or more arthropods that it is an arthropod,
   - for each image:
      ∘ inputting the image into the first machine learning model,
      ∘ receiving an output from the first machine learning model, the output comprising predicted location information and predicted class information,
      ∘ determining a deviation between (i) the location information and the predicted location information, and (ii) the class information and the predicted class information,
      ∘ reducing the deviation by modifying model parameters of the first machine learning model.
23. A computer system comprising:
   a processing unit; and
   a memory storing a computer program configured to perform, when executed by the processing unit, an operation, the operation comprising:
      - receiving a first image of an area in which one or more arthropods are present,
      - feeding the first image to a first machine learning model, wherein the first machine learning model is configured and was trained to locate arthropods in the first image,
      - generating a second image in which the one or more arthropods are marked,
      - outputting the second image to a user,
      - receiving a user input from the user, wherein the user input specifies for one or more marked arthropods that they belong to a defined class,
      - feeding the user input to a second machine learning model, wherein the second machine learning model comprises a classifier, wherein the second machine learning model is configured to use the user input as target data for training the classifier,
      - storing and/or outputting the trained classifier and/or parameters of the trained classifier and/or transmitting the trained classifier and/or parameters of the trained classifier to a separate computer system.
24. A non-transitory computer readable storage medium having stored thereon a computer program that, when executed by a processing unit of a computer system, cause the computer system to execute the following steps:
   - receiving a first image of an area in which one or more arthropods are present,
   - feeding the first image to a first machine learning model, wherein the first machine learning model is configured and was trained to locate arthropods in the first image,
   - generating a second image in which the one or more arthropods are marked,
   - outputting the second image to a user,
   - receiving a user input from the user, wherein the user input specifies for one or more marked arthropods that they belong to a defined class,
   - feeding the user input to a second machine learning model, wherein the second machine learning model comprises a classifier, wherein the second machine learning model is configured to use the user input as target data for training the classifier,
   - storing and/or outputting the trained classifier and/or parameters of the trained classifier and/or transmitting the trained classifier and/or parameters of the trained classifier to a separate computer system.

The aspects of the present disclosure are described in more detail below with reference to drawings, without wishing to limit the disclosure to the features and combinations of features shown in the drawings. Statements made in relation to the embodiments shown in the drawings are intended to apply analogously to other embodiments.

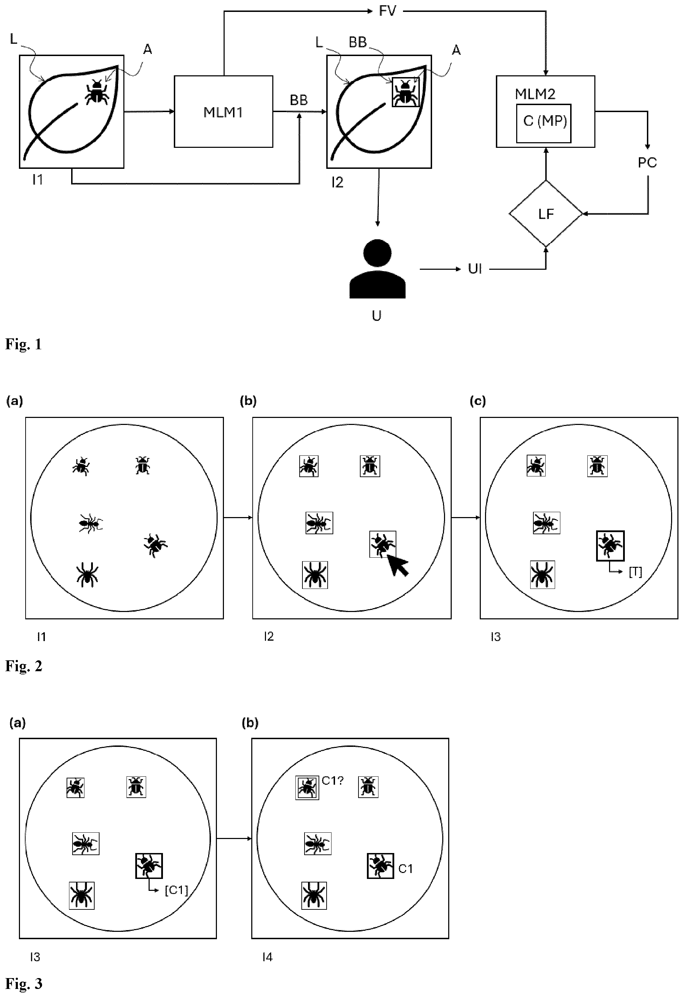

Fig. 1 shows an exemplary and schematic embodiment of the computer-implemented method of the present disclosure.

Fig. 1 shows a first image I1. The first image I1 shows a leaf L of a plant. There is an arthropod A on the leaf L. The first image I1 is fed to a first machine learning model MLM1. The first machine learning model MLM1 is configured and trained to localize arthropods in images.

The first machine learning model MLM1 receives the first image I1 and localizes the arthropod A in the first image I1. In the example shown in Fig. 1, the first machine learning model MLM1 is configured and trained to output coordinates and/or parameters of a bounding box BB.

The first machine learning model MLM1 is further configured to provide a feature vector FV that represents/characterizes the arthropod A.

A second image I2 is generated by drawing the bounding box BB around the arthropod A. The second image I2 is displayed to a user U.

The user U provides a user input UI. The user input UI indicates what kind of arthropod the arthropod A is. The user input corresponds to a class label for the arthropod A.

The user input UI is fed to a second machine learning model MLM2.

The second model MLM2 comprises a classifier C. The user input UI (class label provided by the user) is used as target data for training the classifier C.

To train the classifier C, the feature vector FV representing the arthropod A depicted in the first image I1 and/or second image I2 is used as input data to the classifier C. In the example shown in Fig. 1, the feature vector FV is provided by the first machine learning model MLM1.

The classifier C of the second machine learning model MLM2 is configured to assign the arthropod A to one of at least two classes based on the feature vector FV and model parameters MP of the classifier C. The second machine learning model MLM2 and/or the classifier C outputs a predicted class PC. The predicted class PC is compared with the user input UI. A deviation between the predicted class PC and the user input UI is determined by means of a loss function LF. The deviation is reduced by modifying model parameters MP of the classifier C and/or the second machine learning model MLM2.

Fig. 2 exemplarily and schematically shows the processing of a first image by the computer system of the present disclosure.

Fig. 2 (a) shows the first image I1. The first image I1 shows a round catch tray in a top view, in which a plurality of arthropods are located.

Fig. 2 (b) shows a first output of the computer system of the present disclosure. The first output shows a second image I2. The second image I2 shows the round catch tray of Fig. 2 (a), in which a plurality of arthropods are marked. In the second image I2 shown in Fig. 2 (b), the arthropods are marked by bounding boxes.

Fig. 2 (b) also shows how a user selects one of the arthropods. The selection can be made, for example, by clicking the arthropod with a mouse pointer and/or by finger-tapping the arthropod on a touchscreen.

Fig. 2 (c) shows a second output of the computer system of the present disclosure. The second output shows a third image I3. In the third image I3, the arthropod selected by the user is highlighted by a bounding box with a wider border. In the example shown in Fig. 2 (c), a text field ([T]) is opened in response to the user clicking on the arthropod, in which the user can enter the type of arthropod. The type can be, for example, the biological species. This information may be used by the second machine learning model as target data to train the classifier.

Fig. 3 schematically shows a further embodiment of the processing of a first image by the computer system of the present disclosure.

The outputs of the computer system shown in Figures 3 (a) and 3 (b) follow the outputs in Figures 2 (a), (b) and (c) in terms of time.

In the output shown in Fig. 3 (a), the user has classified the selected arthropod as C1.

This information is used to train the classifier of the second machine learning model.

Once the classifier has been trained using this information, the trained classifier is used to automatically classify the arthropods not selected by the user.

In the output shown in Fig. 3 (b), the computer system of the present disclosure has recognized that another arthropod of class C1 may be present. In the image I4, this is highlighted by a double frame, so that the user can recognize that another arthropod of the species SP1 was detected in the image I4.

The double frame can be understood as a suggestion from the computer system. The user can confirm or reject this suggestion by means of a user input. This user input can also be used to train the classifier.

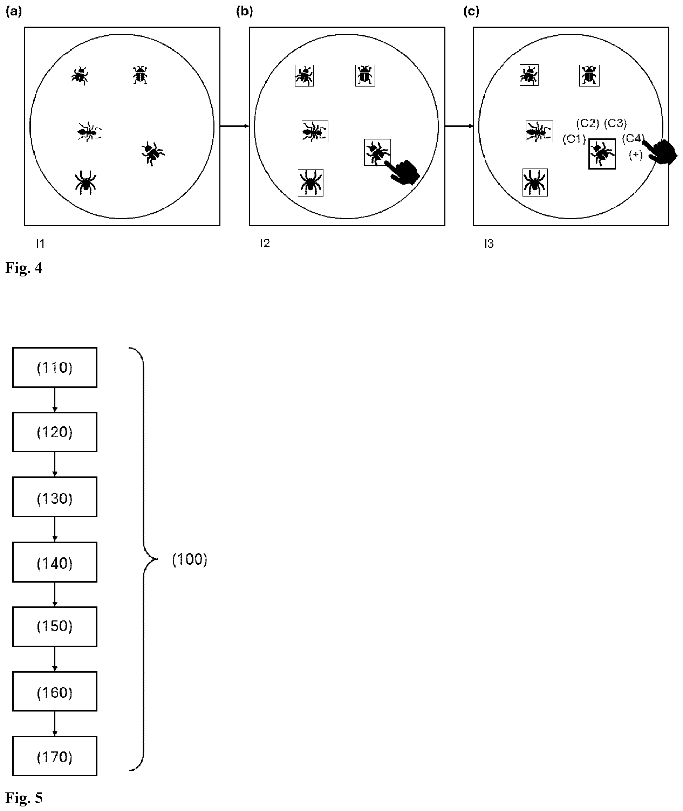

Fig. 4 schematically shows a further embodiment of the processing of a first image by the computer system of the present disclosure.

Fig. 4 (a) shows the first image I1. The first image I1 shows a round catch tray in a top view, in which a plurality of arthropods are located.

Fig. 4 (b) shows a first output of the computer system of the present disclosure. The first output shows a second image I2. The second image I2 shows the round catch tray of Fig. 4 (a), in which a plurality of arthropods are marked. In the second image I2 shown in Fig. 4 (b), the arthropods are marked by bounding boxes.

Fig. 4 (b) also shows how a user selects one of the arthropods. The selection can be made, for example, by clicking the arthropod with a mouse pointer and/or by finger-taping the arthropod on a touchscreen.

Fig. 4 (c) shows a second output of the computer system of the present disclosure. The second output shows a third image I3. In the third image I3, the arthropod selected by the user is highlighted by a bounding box with a wider border. In the example shown in Fig. 4 (c), the computer system of the present disclosure is configured to output a selection menu to the user.

In the example shown in Fig. 4, the user can select one of the four classes C1, C2, C3, C4. In the example shown in Fig. 4, the user selects class C4.

In the example shown in Fig. 4, the user can enter a new class by selecting the + sign. It is possible that at the start of training the classifier, only the + sign is available for selection and other classes are only available for selection once the user has entered them.

Fig. 5 schematically shows an embodiment of the computer-implemented method of the present disclosure. The method (100) comprises the steps:

| | |
|---|---|
| (110) | receiving a first image of an area in which one or more arthropods are present, |
| (120) | feeding the first image to a first machine learning model, wherein the first machine learning model is configured and was trained to locate arthropods in the first image, |
| (130) | generating a second image in which the one or more arthropods are marked, |
| (140) | outputting the second image to a user, |
| (150) | receiving a user input from the user, wherein the user input specifies for one or more marked arthropods that they belong to a defined class, |
| (160) | feeding the user input to a second machine learning model, wherein the second machine learning model comprises a classifier, wherein the second machine learning model is configured to use the user input as target data for training the classifier, |
| (170) | storing and/or outputting the trained classifier and/or parameters of the trained classifier and/or transmitting the trained classifier and/or parameters of the trained classifier to a separate computer system. |

The operations in accordance with the teachings herein may be performed by at least one computer system specially constructed for the desired purposes or general-purpose computer specially configured for the desired purpose by at least one computer program stored in a typically non-transitory computer readable storage medium.

A "computer system" is a system for electronic data processing that processes data by means of programmable calculation rules. Such a system usually comprises a "computer", that unit which comprises a processor for carrying out logical operations, and also peripherals.

In computer technology, "peripherals" refer to all devices which are connected to the computer and serve for the control of the computer and/or as input and output devices. Examples thereof are monitor (screen), printer, scanner, mouse, keyboard, drives, camera, microphone, loudspeaker, etc. Internal ports and expansion cards are, too, considered to be peripherals in computer technology.

Computer systems of today are frequently divided into desktop PCs, portable PCs, laptops, notebooks, netbooks and tablet PCs and so-called handhelds (e.g. smartphone); all these systems can be utilized for carrying out the computer-implemented method of the present disclosure.

The term "non-transitory" is used herein to exclude transitory, propagating signals or waves, but to otherwise include any volatile or non-volatile computer memory technology suitable to the application.

The term "computer system" should be broadly construed to cover any kind of electronic device with data processing capabilities, including, by way of non-limiting example, personal computers, servers, embedded cores, computing system, communication devices, processors (e.g., digital signal processor (DSP)), microcontrollers, field programmable gate array (FPGA), application specific integrated circuit (ASIC), etc.) and other electronic computing devices.

The term "process" as used above is intended to include any type of computation or manipulation or transformation of data represented as physical, e.g., electronic, phenomena which may occur or reside e.g., within registers and/or memories of at least one computer system or processor. The term processing unit includes a single processor or a plurality of distributed or remote such units.

Fig. 5 illustrates a computer system (1) according to some example implementations of the present disclosure in more detail. The computer system may include one or more of each of a number of components such as, for example, a processing unit (20) connected to a memory (50) (e.g., storage device).

The processing unit (20) may be composed of one or more processors alone or in combination with one or more memories. The processing unit (20) is generally any piece of computer hardware that is capable of processing information such as, for example, data, computer programs and/or other suitable electronic information. The processing unit (20) is composed of a collection of electronic circuits some of which may be packaged as an integrated circuit or multiple interconnected integrated circuits (an integrated circuit at times more commonly referred to as a "chip"). The processing unit (20) may be configured to execute computer programs (60), which may be stored onboard the processing unit or otherwise stored in the memory (50) of the same or another computer.

The processing unit (20) may be a number of processors, a multi-core processor or some other type of processor, depending on the particular implementation. Further, the processing unit (20) may be implemented using a number of heterogeneous processor systems in which a main processor is present with one or more secondary processors on a single chip. As another illustrative example, the processing unit (20) may be a symmetric multi-processor system containing multiple processors of the same type. In yet another example, the processing unit (20) may be embodied as or otherwise include one or more ASICs, FPGAs or the like. Thus, although the processing unit (20) may be capable of executing a computer program (60) to perform one or more functions, the processing unit (20) of various examples may be capable of performing one or more functions without the aid of a computer program (60). In either instance, the processing unit (20) may be appropriately programmed to perform functions or operations according to example implementations of the present disclosure.

The memory (50) is generally any piece of computer hardware that is capable of storing information such as, for example, data, images, computer programs (e.g., computer-readable program code (60)), machine learning models and/or other suitable information either on a temporary basis and/or a permanent basis. The memory may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD, Blu-ray disk or the like. In various instances, the memory may be referred to as a computer-readable storage medium. The computer-readable storage medium is a non-transitory device capable of storing information, and is distinguishable from computer-readable transmission media such as electronic transitory signals capable of carrying information from one location to another. Computer-readable medium as described herein may generally refer to a computer-readable storage medium or computer-readable transmission medium.

In addition to the memory (50), the processing unit (20) may also be connected to one or more interfaces for displaying, transmitting and/or receiving information. The interfaces may include one or more communications interfaces and/or one or more user interfaces. The communications interface(s) may be configured to transmit and/or receive information, such as to and/or from other computer(s), network(s), database(s), camera(s) or the like. The communications interface may be configured to transmit and/or receive information by physical (wired) and/or wireless communications links. The communications interface(s) may include interface(s) (41) to connect to a network, such as using technologies such as cellular telephone, Wi-Fi, satellite, cable, digital subscriber line (DSL), fiber optics and the like. In some examples, the communications interface(s) may include one or more short-range communications interfaces (42) configured to connect devices using short-range communications technologies such as NFC, RFID, Bluetooth, Bluetooth LE, ZigBee, infrared (e.g., IrDA) or the like.

The user interfaces may include a display (30). The display (30) may be configured to present or otherwise display information to a user, suitable examples of which include a liquid crystal display (LCD), light-emitting diode display (LED), plasma display panel (PDP) or the like. The user input interface(s) (11) may be wired or wireless, and may be configured to receive information from a user into the computer system (1), such as for processing, storage and/or display. Suitable examples of user input interfaces include a microphone, image or video capture device, keyboard or keypad, joystick, touch-sensitive surface (separate from or integrated into a touchscreen) or the like. In some examples, the user interfaces may include automatic identification and data capture (AIDC) technology (12) for machine-readable information. This may include barcode, radio frequency identification (RFID), magnetic stripes, optical character recognition (OCR), integrated circuit card (ICC), and the like. The user interfaces may further include one or more interfaces for communicating with peripherals such as printers, cameras and the like.

As indicated above, a computer program (60) may be stored in memory (50), and executed by processing unit (20) that is thereby programmed, to implement functions of the systems, subsystems, tools and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, processing unit or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processing unit or other programmable apparatus to configure the computer, processing unit or other programmable apparatus to execute operations to be performed on or by the computer, processing unit or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

Execution of instructions by processing unit, or storage of instructions in a computer-readable storage medium, supports combinations of operations for performing the specified functions. In this manner, a computer system (1) may include processing unit (20) and a computer-readable storage medium or memory (50) coupled to the processing circuitry, where the processing circuitry is configured to execute computer-readable program code (60) stored in the memory. It will also be understood that one or more functions, and combinations of functions, may be implemented by special purpose hardware-based computer systems and/or processing circuitry which perform the specified functions, or combinations of special purpose hardware and program code instructions.

## Claims

1. A computer-implemented method comprising:
- receiving a first image of an area in which one or more arthropods are present,
- feeding the first image to a first machine learning model, wherein the first machine learning model is configured and was trained to locate arthropods in the first image,
- generating a second image in which the one or more arthropods are marked,
- outputting the second image to a user,
- receiving a user input from the user, wherein the user input specifies for one or more marked arthropods that they belong to a defined class,
- feeding the user input to a second machine learning model, wherein the second machine learning model comprises a classifier, wherein the second machine learning model is configured to use the user input as target data for training the classifier,
- storing and/or outputting the trained classifier and/or parameters of the trained classifier and/or transmitting the trained classifier and/or parameters of the trained classifier to a separate computer system.

2. The method of claim 1, further comprising:
- generating a labelled image based on the first image and/or the second image and the user input,
- storing and/or outputting the labelled image and/or transmitting the labelled image to a separate computer system.

3. The method of claim 1 or 2, wherein arthropods means insects and/or arachnids.

4. The method of any one of claims 1 to 3, wherein the area is part of a trap for arthropods.

5. The method of any one of claims 1 to 4, wherein the user input comprises:
- selecting a marked arthropod,
- assigning the selected arthropod to one of at least two classes.

6. The method of claim 5, wherein the classifier is trained to map a feature vector representing the selected arthropod to one class of the at least two classes.

7. The method of claim 6, wherein the class is a biological taxonomic class, order, family, genus, and/or species and/or a combination thereof.

8. The method of claim 7, wherein the class indicates a biological interaction with a plant.

9. The method of claim 8, wherein the class represents pest controllable with a plant protection product.

10. The method of any one of claims 5 to 9, wherein training of the classifier comprises:
- inputting a feature vector representing the selected arthropod into the classifier,
- receiving a predicted class from the classifier,
- determining a deviation between the predicted class and the target data,
- reducing the deviation by modifying model parameters of the classifier.

11. The method of any one of claims 5 to 10, wherein the classifier is configured to assign one or more marked arthropods not selected by the user to the one of the at least two classes once the classifier has been trained based on the user input.

12. The method of claim 11, further comprising:
- outputting a third image comprising the assignments of the trained classifier.

13. The method of claim 12, further comprising:
- receiving a confirmation or rejection from the user that the one or more assigned arthropods have been correctly classified,
- using the confirmation or rejection as further training data for training the classifier.

14. The method of any one of claims 1 to 16, wherein the classifier is a shallow classifier.

15. The method of any one of claims 5 to 14, wherein the feature vector representing the selected arthropod is provided by the first machine learning model

16. The method of any one of claims 1 to 15, wherein the first machine learning model is or comprises an object detection model, wherein training the first machine learning model comprised:
- providing training data, wherein the training data comprises a plurality of images of a plurality of arthropods, as well as location information and class information for each image, wherein the location information indicates where one or more arthropods are located in the image, and the class information indicates for each of the one or more arthropods that it is an arthropod,
- for each image:
∘ inputting the image into the first machine learning model,
∘ receiving an output from the first machine learning model, the output comprising predicted location information and predicted class information,
∘ determining a deviation between (i) the location information and the predicted location information, and (ii) the class information and the predicted class information,
∘ reducing the deviation by modifying model parameters of the first machine learning model.

17. A computer system comprising:
a processing unit; and
a memory storing a computer program configured to perform, when executed by the processing unit, an operation, the operation comprising:
- receiving a first image of an area in which one or more arthropods are present,
- feeding the first image to a first machine learning model, wherein the first machine learning model is configured and was trained to locate arthropods in the first image,
- generating a second image in which the one or more arthropods are marked,
- outputting the second image to a user,
- receiving a user input from the user, wherein the user input specifies for one or more marked arthropods that they belong to a defined class,
- feeding the user input to a second machine learning model, wherein the second machine learning model comprises a classifier, wherein the second machine learning model is configured to use the user input as target data for training the classifier,
- storing and/or outputting the trained classifier and/or parameters of the trained classifier and/or transmitting the trained classifier and/or parameters of the trained classifier to a separate computer system.

18. A non-transitory computer readable storage medium having stored thereon a computer program that, when executed by a processing unit of a computer system, cause the computer system to execute the following steps:
- receiving a first image of an area in which one or more arthropods are present,
- feeding the first image to a first machine learning model, wherein the first machine learning model is configured and was trained to locate arthropods in the first image,
- generating a second image in which the one or more arthropods are marked,
- outputting the second image to a user,
- receiving a user input from the user, wherein the user input specifies for one or more marked arthropods that they belong to a defined class,
- feeding the user input to a second machine learning model, wherein the second machine learning model comprises a classifier, wherein the second machine learning model is configured to use the user input as target data for training the classifier,
- storing and/or outputting the trained classifier and/or parameters of the trained classifier and/or transmitting the trained classifier and/or parameters of the trained classifier to a separate computer system.
